# FASCICULE DE BREVET EUROPEEN

(11) **EP 3 137 326 B1**
(45) Date de publication et mention de la délivrance du brevet: **06.05.2020**
(21) Numéro de dépôt: 15715790.0
(22) Date de dépôt: 18.03.2015
(51) Int. Cl.: B60J 5/04

(54) **PORTE ALLEGEE COMPORTANT UNE STRUCTURE DE RIGIDIFICATION**
LEICHTBAUTÜR MIT VERSTEIFUNGSSTRUKTUR
LIGHTWEIGHT DOOR COMPRISING A STIFFENING STRUCTURE

(30) Priorité: 30.04.2014 FR 1453908
(43) Date de publication de la demande: 08.03.2017
(73) Titulaire: PSA Automobiles SA, 78300 Poissy (FR)
(72) Inventeur: MESARIC, Stéphane, F-92350 Le Plessis Robinson (FR); FERRAND, Stéphane, F-78760 Jouars Pontchartrain (FR)
(86) Numéro de dépôt international: PCT/FR2015/050656
(87) Numéro de publication internationale: WO 2015/166148

(56) Documents cités:
- EP-A1- 2 996 891
- EP-A2- 2 014 494
- WO-A1-03/037669
- WO-A1-2004/108481
- WO-A1-2012/028828
- DE-A1- 10 031 850

## Description

L'invention concerne une porte allégée comportant une structure renforçant la rigidité de ladite porte.

La réduction de la masse des véhicules automobiles est une orientation importante pour permettre une réduction de la consommation de carburant des véhicules. Les concepteurs cherchent à réduire cette masse au niveau de tous les composants du véhicule. Au niveau des portes latérales du véhicule, une des orientations est de réduire la quantité de matière utilisée, notamment en ajourant la doublure de la porte, située côté habitacle du véhicule et qui est généralement recouvert d'un panneau de garnissage, et ce, en diminuant les épaisseurs de la tôle utilisée. Cette solution a comme inconvénient de diminuer la rigidité de la porte, ce qui peut devenir perceptible par le client et donner une mauvaise appréciation de la qualité et de la solidité du véhicule. Une autre solution consiste à utiliser des matériaux plus légers mais rigides comme par exemple des tôles d'aluminium. Mais les doublures de porte comportent généralement des formes réalisées par des emboutis profonds, dont la réalisation en tôle d'aluminium rigide est difficile à réaliser.

Le brevet US6170199 décrit une porte de véhicule comportant une doublure avec un grand ajourage en son centre. Une structure de renfort comportant un rail de guidage de lève-vitre est positionnée sensiblement verticalement dans cet ajourage, sur les bords de la doublure qui sont positionnés respectivement au-dessus et en-dessous dudit ajourage. Ladite structure de renfort comporte dans un bras complémentaire fixé d'un côté sur la doublure à proximité de l'angle formé par le bord inférieur et le bord avant dudit ajourage, le bord avant étant le bord latéral situé du côté de l'avant du véhicule lorsque la porte est installée sur le véhicule, et de l'autre côté sur une partie de la structure de renfort située entre les fixations sur les parties de la doublure situées au-dessus et en dessous de l'ajourage. Ce bras complémentaire est agencé pour recevoir un haut-parleur. Cette structure de renfort associée à ce bras complémentaire permet de renforcer la rigidité de la doublure.

Les documents WO03/037669 A1 ou DE 100 31 850 A1 décrivent également une telle porte de véhicule comportant une doublure avec un grand ajourage en son centre.

Cependant, une telle conception ne permet pas de diminuer l'épaisseur de la tôle utilisée pour la doublure car la structure de renfort est fixée uniquement sur ladite doublure. Ainsi, si l'épaisseur de la tôle utilisée pour réaliser la doublure est diminuée, la tôle ne sera pas assez résistante pour récupérer les efforts issus de la structure de renfort. Ensuite, la forme de la structure de renfort elle-même n'est pas optimisée pour rigidifier la porte de manière importante. De plus, la doublure étant moins rigide du fait de la grande ouverture pratiquée dans son milieu, les efforts générés par l'arrivée en butée de la porte lors de son ouverture va générer une déformation de la doublure au niveau des fixations des charnières sur la doublure ou de la fixation d'un renfort de charnière, sur lequel sont fixées les charnières de la porte, le long de la tranche avant de la doublure, qui peut détériorer ladite doublure.

La présente invention a pour but d'améliorer la conception de la porte de manière à en réduire sa masse, d'en simplifier la fabrication, et ce, sans dégrader sa rigidité. Un autre but est de diminuer le coût d'une porte allégée, en particulier en utilisant des matériaux moins cher.

Ce but est atteint selon la revendication 1, définissant l'invention à l'aide d'une porte de véhicule comportant au moins une doublure de porte et un panneau extérieur fixé à ladite doublure, définissant entre eux un caisson dans la partie de la porte située sous une partie fenêtre, la doublure comportant un ajourage qui s'étend sur une partie prépondérante de la longueur et de la hauteur de ladite doublure dans le caisson, de sorte que ladite partie de la doublure située dans le caisson est sensiblement réduite à un cadre, une structure de rigidification de ladite porte fixée dans la zone du caisson et comportant au moins trois points de fixation, caractérisée en ce que la porte comporte en outre au moins un renfort positionné le long du bord haut du caisson, sous la partie fenêtre de la porte, et un des trois points de fixation de la structure de rigidification est un point de fixation haut fixé audit renfort.

Ainsi avantageusement, les efforts de la structure de rigidification sont transmis à la porte par le renfort plus rigide que la doublure. Cette conception évite les risques de fissuration ou d'arrachement de la doublure au niveau de la zone de fixation du point de fixation haut. De plus, les risques de déformation de la doublure par les efforts transitant d'un bord latéral à l'autre de la doublure sont diminués, comme par exemple les efforts transitant entre une serrure fixée sur l'un des bords latéraux de la doublure et des charnières situées sur le bord latéral de la doublure qui est opposé à la serrure. De même, les risques de déformation de la doublure au niveau du point de fixation haut de la structure de rigidification sous des efforts perpendiculaire à la surface définie par les bords de la doublure définissant l'ajourage, sont évités car lesdits efforts sont repris par le renfort plus rigide que la doublure.

Le renfort est réalisé dans un matériau plus rigide que celui de la doublure, ou d'épaisseur plus importante. Le renfort peut être par exemple un renfort de choc frontal, un renfort du bord supérieur de la doublure le long du bord haut du caisson, ou encore une partie d'un élément d'un cadre de vitre rajouté entourant la partie fenêtre de la porte.

De préférence, le renfort est fixé au moins à la doublure.

Dans un mode de réalisation particulier de l'invention, le point de fixation haut de la structure de rigidification peut être fixé en même temps sur la doublure et sur le renfort. Le renfort s'étend de préférence d'un bord à l'autre de la porte.

Dans un autre mode de réalisation de l'invention, la porte comporte un renfort de serrure disposé à proximité ou relié à l'une des extrémités du renfort. De préférence, le renfort de serrure est disposé sur l'un des bords de la porte.

Selon l'invention, l'un des trois points de fixation de la structure de rigidification est un point de fixation bas fixé à ladite porte en au moins un point situé en dessous de l'ajourage, au niveau de la partie du caisson sensiblement située à l'opposé du point de fixation haut, en se plaçant dans le référentiel du véhicule lorsque la porte est installée sur ledit véhicule.

Cette disposition du point de fixation bas permet une bonne rigidification de la porte par la structure de rigidification en créant une liaison rigide entre la partie haute et la partie basse du caisson de porte.

Selon un autre mode de réalisation de l'invention, le point de fixation bas de la structure de rigidification est fixé directement sur la doublure et/ou sur un renfort de fixation bas fixé à la doublure.

Dans un mode de réalisation préféré de l'invention, le renfort de fixation bas est agencé pour suivre au moins en partie la forme de la partie basse de la doublure située en dessous de l'ajourage. Cette solution permet de renforcer localement la doublure, en particulier lorsque celle-ci est réalisée dans une matière peu résistante ou peu rigide. Le renfort de fixation bas peut être une pièce rapportée, en acier, en magnésium, en matériau composite, ou en aluminium.

De préférence, le bord de la doublure situé en bas de caisson, sous l'ajourage, en se plaçant dans le référentiel du véhicule, et que l'on désignera par la suite par « bord bas », est formé au moins par deux plans non parallèles, et le renfort de fixation bas comporte au moins deux pans agencés pour suivre les deux plans non parallèles du bord bas de la doublure, au moins l'un des pans étant fixé au moins sur l'un desdits plans. De préférence, les deux plans sont sensiblement perpendiculaires l'un à l'autre et le renfort de fixation bas forme une équerre suivant lesdits deux plans.

En variante, le renfort de fixation bas peut être intégré à la structure de rigidification. Selon l'invention, la structure de rigidification comporte un point de fixation intermédiaire fixé à la porte entre l'ajourage et un des bords latéraux de la porte.

Le point de fixation intermédiaire permet à la structure de rigidification d'augmenter la rigidité de la porte.

Dans un mode de réalisation particulier de l'invention, le point de fixation intermédiaire est fixé à la doublure, et ladite doublure comporte localement un élément de rigidification au niveau de la fixation sur ladite doublure du point de fixation intermédiaire.

Selon l'invention, la structure de rigidification comporte au moins trois branches, une première branche disposée entre le point de fixation haut et le point de fixation bas, une deuxième et une troisième branche reliant chacune la première branche au point de fixation intermédiaire.

Ainsi avantageusement, les efforts se répartissent sur les différentes branches et la rigidité de la structure de rigidification est améliorée.

Les branches peuvent former des supports pour d'autres fonctions, comme par exemple pour réaliser le support du haut-parleur. D'autres branches peuvent être installées de manière à renforcer la rigidité et permettre la fixation d'équipement pour d'autres fonctions. Des supports pour d'autres équipements ou des équipements peuvent être intégrées au renfort de rigidification, comme par exemple un support de haut-parleur, un support de poignée de tirage ou encore une poignée de tirage.

De préférence, les branches s'étendent sensiblement entre chaque point de fixation, de manière à former une forme sensiblement en triangle.

La structure de rigidification peut comporter d'autres éléments de structure reliant les branches entre elles.

Dans un mode de réalisation préféré de l'invention, la structure de rigidification supporte un rail de guidage de lève-vitre s'étendant au moins entre le point de fixation haut et le point de fixation bas de ladite structure de rigidification.

Ainsi, le montage de la structure de rigidification permet le montage en même temps du rail de guidage, simplifiant les opérations de montage. Le rail de guidage peut être une pièce métallique, très rigide, participant à la rigidité de la structure de rigidification, ou être réalisé par la première branche comportant une partie formant le rail de guidage.

Dans un autre mode de réalisation de l'invention, la porte comporte un renfort de charnières fixé à l'une des tranches latérales de la porte et sur lequel des charnières sont fixées.

Le renfort de charnières permet avantageusement de renforcer la porte au niveau de la fixation des charnières. Il peut être constitué par exemple par une pièce rapportée sur la porte ou sur la doublure, ou être réalisé par une surépaisseur de la doublure, afin de renforcer ladite doublure de porte. Le renfort de charnières peut être réalisé en une seule pièce ou être composé de plusieurs pièces. Un arrêt de porte, destiné à limiter l'angle d'ouverture de porte, peut être aussi fixé au renfort de charnières. Ainsi, grâce à la structure de rigidification, les efforts provenant de l'arrêt de porte suite à l'arrivée en butée de ladite porte lors de son ouverture, sont repris dans ladite structure de rigidification, limitant les déformations de la doublure.

Dans un autre mode de réalisation de l'invention, le renfort de charnières forme au moins en partie la tranche de la porte.

Ainsi, la quantité de matière utilisée pour faire la porte peut être diminuée, donc la masse aussi. De plus, la doublure peut être réalisée dans une matière légère ou avec de très faibles épaisseurs de tôle donnant à ladite doublure une faible rigidité, le renfort de charnières créant une zone plus solide pour supporter les charnières. Par exemple, l'ensemble de la tranche latérale de la porte comportant les charnières peut être formé en partie par le renfort de charnières, le reste de la tranche étant formé par une partie de la doublure.

Un recouvrement sur des bords du renfort de charnières avec la doublure ou un recouvrement partiel du renfort de charnières par la doublure peut être prévu, notamment pour fixer le renfort de charnières à la doublure dans les parties de recouvrement, par exemple par collage, par soudage, par rivetage, par clinchage seul ou associé à un collage, ou tout autre moyen de fixation connu par l'homme du métier.

Un recouvrement complet du renfort de charnières par la doublure de porte pour former la tranche latérale de la porte est aussi envisageable.

Dans un autre mode de réalisation préféré de l'invention, le renfort de charnières s'étend jusqu'au renfort de manière à permettre une transmission directe des efforts entre le renfort de charnières et le renfort.

Dans un autre mode de réalisation de l'invention, le point de fixation intermédiaire est fixé au renfort de charnières ou/et à la doublure.

La doublure est rigidifiée au voisinage du renfort de charnières par ledit renfort de charnière, entre l'ajourage et ledit renfort de charnière. En fixant le point de fixation intermédiaire de la structure de rigidification au renfort de charnières, la rigidité de la porte est avantageusement améliorée car les efforts de la structure de rigidification sont directement repris par le renfort de charnière. En effet, le renfort de charnières est une pièce très rigide car il doit supporter entre autre tout le poids de la porte qui est repris par les charnières lorsque ladite porte est ouverte. Le renfort de charnières peut être réalisé en une ou plusieurs pièces indépendantes.

Dans un autre mode de réalisation de l'invention, le point de fixation intermédiaire est fixé à l'une des charnières de la porte.

Dans une variante de réalisation de l'invention, la doublure est réalisée en tôle d'aluminium dont la nuance de l'aluminium est une nuance de série 3000 ou 8000.

Ces nuances d'aluminium ont l'avantage de permettre de faire des pièces en aluminium avec des emboutis profonds car elles sont suffisamment ductiles. De plus, les tôles d'aluminium utilisées peuvent être plus minces, par exemple des tôles d'épaisseurs inférieures ou égales à 1 millimètre. La masse de la porte est ainsi encore réduite. Un autre avantage est que ces nuances d'aluminium sont peu chères. Le manque de rigidité de ces tôles est contre carré par la conception particulière de la porte avec sa structure de rigidification telle que décrite. On obtient ainsi une porte à la fois rigide, légère et peu chère.

Dans un autre mode de réalisation de l'invention, la porte comporte un encadrement de vitre se positionnant autour de la partie fenêtre de la porte et formant un cadre, comportant un bord inférieur d'encadrement positionné dans le caisson le long du bord supérieur dudit caisson longeant la partie fenêtre de la porte, ledit bord inférieur d'encadrement formant au moins une partie du renfort.

L'encadrement de vitre vient à la fois renforcer ou créer un cadre autour de la vitre, est créer un renfort de la porte le long du bord haut du caisson sur lequel la structure de rigidification se fixe.

Dans un mode de réalisation de l'invention, la doublure comporte un bord tombé tout le long de son bord entourant l'ajourage.

Ainsi avantageusement, la doublure est rigidifiée par le bord tombé.

L'invention sera mieux comprise à la lecture de la description qui va suivre, donnée uniquement à titre d'exemple et faite en se référant aux dessins annexés, dans lesquels :
- La fig. 1 est schéma d'une porte de véhicule suivant l'invention, dépourvue de panneau extérieur, suivant une vue depuis la face de la porte orientée côté extérieur du véhicule.
- La fig. 2 est une vue de la face orientée vers l'extérieur du véhicule d'une porte sans le panneau extérieur, suivant un mode de réalisation particulier de l'invention, dans lequel la porte comporte un encadrement de vitre fixé à la doublure.
- La fig. 3 est une vue en coupe suivant un plan perpendiculaire au renfort de porte, au niveau du point de fixation haut de la structure de rigidification.
- La fig. 4 est une vue éclatée d'une porte suivant l'invention

Les dessins sont des représentations schématiques pour faciliter la compréhension de l'invention. Les composants ne sont pas forcément représentés à l'échelle. Les mêmes références correspondent aux mêmes composants d'une figure à l'autre.

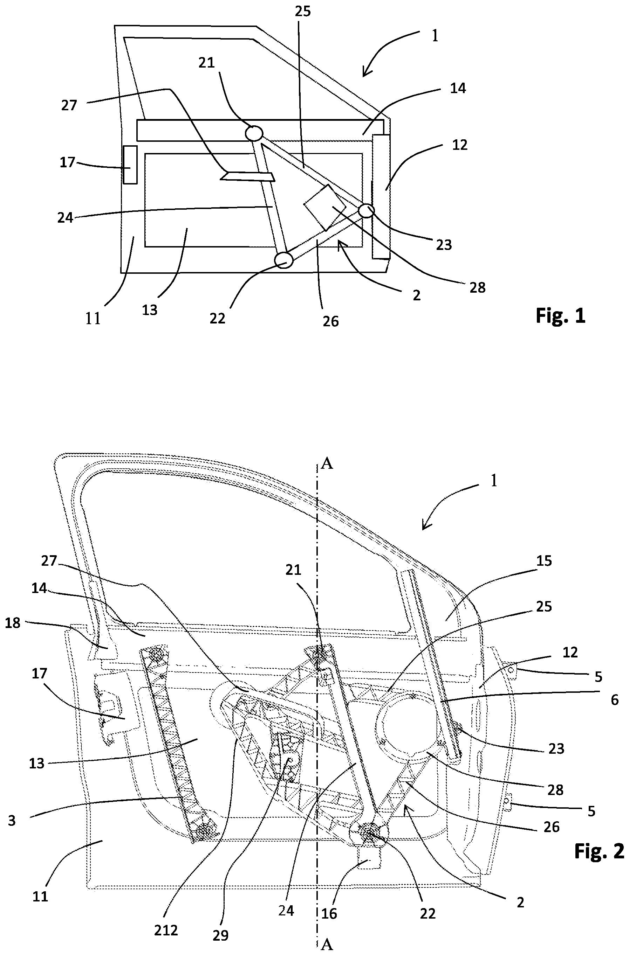

La fig. 1 montre un schéma de principe d'une porte de véhicule 1 suivant un premier mode de réalisation de l'invention. La porte 1 comporte une doublure 11 et un panneau extérieur non représenté. La porte 1 comporte une partie fenêtre et un caisson formé par la doublure 11 et le panneau extérieur, sous la partie fenêtre. La partie de la doublure 11 située au niveau du caisson comporte un ajourage 13 de grandes dimensions par rapport à ladite partie de la doublure 11 située au niveau dudit caisson. L'ajourage 13 dans la doublure 11 a une forme sensiblement rectangulaire et s'étend de manière à réduire la doublure 11 au niveau du caisson à une forme de cadre. En créant ce type d'ajourage 13, la quantité de matière utilisée pour réaliser la porte 1 est diminuée, ce qui permet de réduire la masse. La forme de l'ajourage 13 est représentée sensiblement rectangulaire. D'autres formes peuvent être envisagées, par exemple en fonction des équipements à fixer à ladite doublure 11.

Afin d'alléger encore la porte 1, la doublure 11 est réalisée de préférence en tôle d'aluminium. Pour permettre de réaliser des tôles de faibles épaisseurs et des emboutis profonds, un aluminium de la gamme des nuances 8000 ou 3000 sont de préférence utilisées. La gamme de nuances 3000 est de préférence privilégiée pour sa meilleure résistance à la corrosion.

Afin de renforcer la porte 1, un renfort 14 est disposé le long du bord haut du caisson, sous la partie fenêtre. Ce renfort 14 peut être par exemple un élément renforçant le bord de la doublure 11 situé le long du bord haut du caisson ou un renfort de choc frontal, formant un renfort longitudinal. Il peut être par exemple en aluminium, en acier, en magnésium, ou en matériau composite.

La porte 1 est fixée au véhicule par des charnières disposées de manière à ce que la porte 1 pivote suivant un axe de rotation sensiblement vertical, en se plaçant dans le référentiel du véhicule. Les charnières sont fixées à la porte 1 sur un bord latéral du caisson de la porte 1 et disposées sur la partie avant de ladite porte 1, l'avant correspondant à la direction avant du véhicule lorsque la porte 1 est installée sur le véhicule et est fermée. Les charnières sont fixées sur un renfort de charnières 12, lui-même fixé à la doublure 11. Un arrêt de porte, non représenté en fig.1, permettant de créer une butée pour un certain angle d'ouverture de la porte 1, peut être aussi fixé au renfort de charnières 12. Dans la fig. 1, le renfort de charnières 12 s'étend quasiment sur toute la hauteur du bord latéral du caisson de la porte 1 et est relié au renfort longitudinal 14. Le renfort de charnières 12 est réalisé dans un matériau et/ou une épaisseur différente de la doublure 11 afin d'être plus résistant que ladite doublure 11.

La diminution de la rigidité de la doublure 1 causée par l'ajourage 13 de grande dimension, ainsi que par la diminution des épaisseurs et/ou l'utilisation d'une matière dont les caractéristiques de rigidité sont faibles, est compensé par la mise en place d'une structure de rigidification 2, comportant au moins trois points de fixation 21, 22, 23, fixant ladite structure de rigidification 2 à la porte 1 sur le pourtour de l'ajourage 13 de la doublure 11.

Un premier point de fixation haut 21 est fixé sur la porte entre l'ajourage 13 et le bord haut du caisson. Dans le mode de réalisation de la fig. 1, ledit point de fixation haut 21 est fixé au renfort longitudinal 14. En variante, il peut être fixé uniquement à la doublure 11, ou à la fois à la doublure 11 et au renfort longitudinal 14.

Un deuxième point de fixation bas 22 est fixé en partie basse du caisson, entre l'ajourage 13 et le bord bas du caisson, le bord bas étant le bord le plus bas du caisson en se plaçant dans le référentiel du véhicule, la porte montée sur le véhicule. Le point de fixation bas 22 peut être fixé directement sur la doublure 11. En variante, la doublure 11 peut comporter un élément de renfort au niveau de la fixation du point de fixation bas sur ladite doublure 11 pour renforcer ladite doublure 11 au moins localement et éviter la déformation ou la fissuration de ladite doublure 11.

Un troisième point de fixation intermédiaire 23 est fixé entre l'ajourage 13 et le bord latéral de la porte 1 comportant le renfort de charnières 12. Le point de fixation intermédiaire 23 est fixé sur la doublure, à proximité du renfort de charnières 12 afin de bénéficier du renforcement local de la doublure 11 généré par ledit renfort de charnières 12. En variante, le point de fixation intermédiaire 23 peut être fixé au moins sur le renfort de charnières 12, afin de faire passer les efforts directement dans ledit renfort de charnières 12 en sollicitant au minimum la doublure 11.

Pour donner une bonne rigidité à la structure de rigidification 2, ladite structure de rigidification 2 comporte au moins une première branche 24 disposée entre le point de fixation haut 21 et le point de fixation bas 22, une deuxième branche 25 et une troisième branche 26 disposée chacune entre le point de fixation intermédiaire 23 et la première branche 24. Le distance entre le point d'intersection de la première branche 24 avec la deuxième branche 25 et le point de fixation haut 21, et la distance entre le point d'intersection de la première branche 24 avec la troisième branche 26 et le point de fixation bas 22, sont choisies de préférence plus petites que la distance entre le point d'intersection de la première branche 24 avec la deuxième branche 25 et le point d'intersection de la première branche 24 avec la troisième branche 26. De préférence, les deuxièmes et troisièmes branches 25 et 26 sont reliées à la première branche 24 respectivement au plus près des points de fixation haut 21 et bas 22.

Dans une variante préférée, comme le montre la fig. 1, la deuxième branche 25 est directement reliée entre le point de fixation haut 21 et le point de fixation intermédiaire 23, et la troisième branche 26 est reliée entre le point de fixation bas 22 et le point de fixation intermédiaire 23. La deuxième branche 25 forme ainsi une potence entre le renfort longitudinal 14 et le renfort de charnières 12, renforçant la porte notamment vis-à-vis des efforts verticaux, en se plaçant dans le référentiel du véhicule lorsque la porte 1 est installée sur le véhicule. Les première et troisième branches 24 et 26 renforcent la porte 1 en limitant les déformations de la doublure 2. La forme générale en triangle créée par les branches 24, 25 et 26 reliées entre-elles rigidement, fixées à la doublure directement ou indirectement par les points de fixation haut 21, bas 22 et intermédiaire 23, évite les phénomènes de « poumonage » de la doublure, c'est-à-dire l'écartement de la doublure 11 par rapport au panneau extérieur, en rigidifiant la doublure 2 sur le pourtour de l'ajourage 13.

D'autres fonctions peuvent être installées sur la structure de rigidification 2, afin notamment de bénéficier de sa rigidité et de sa position dans l'ajourage 13. Par exemple, la structure de rigidification 2 peut comporter un support de haut-parleur 28, un support pour une poignée de tirage 27, pour un moteur et un mécanisme de lève-vitre, un absorbeur de choc, ou encore pour une commande d'ouverture de porte.

Un renfort de serrure 17 est positionné sur le bord latéral de la doublure 11 opposé au bord de la porte recevant le renfort de charnières 12, afin de renforcer localement la doublure 12. Le renfort de serrure 17 peut s'étendre jusqu'au renfort longitudinal 14 pour donner à la porte 1 une meilleure résistance, notamment en cas de choc frontal, et mieux transmettre les efforts entre le renfort de serrure 17 et le renfort longitudinal 14.

Dans le mode de réalisation de la porte montré en fig. 2, la structure de rigidification 2 comporte un support de haut-parleur 28 circulaire, dont une partie de la forme circulaire est réalisée par une partie de la deuxième branche 25 et une partie de la troisième branche 26, tandis qu'une autre partie de la forme circulaire relie lesdites branches 25 et 26 à l'intérieur de la forme en triangle créée par les trois branches 24, 25 et 26. La troisième branche 26 relie la première branche 24 au niveau du point de fixation bas 22, tandis que la deuxième branche 25 relie la première branche 24 à proximité du point de fixation 25.

La structure de rigidification 2 comporte une extension 212 s'étendant à l'opposé du point de fixation intermédiaire 23 par rapport à la première branche 24, sensiblement dans le même plan que le plan défini par les trois points de fixations 21, 22 et 23. Cette extension 212 supporte un mécanisme de commande de lève-vitre 29 et un support de poignée de tirage 27. Ladite extension 212 est réalisée par exemple par des branches complémentaires reliées entre-elles, et peut comporter un ou plusieurs points de fixation à la doublure 11 ou à d'autres parties de la porte 1, afin de renforcer la rigidité de la porte, et aussi d'éviter la mise en vibration de ladite extension 212, notamment lors du claquage de ladite porte 1 quand la porte 1 est installée sur un véhicule.

La structure de rigidification 2 est de préférence en matériau composite, comme par exemple un polypropylène chargé de fibre de verre. La forme de ladite structure de rigidification 2 peut être complexe. Par exemple, les branches 24, 25 et 26 de la structure de rigidification 2 à proximité des points de fixations 21, 22 et 23 peuvent avoir des formes complexes permettant de contourner d'autres parties de la porte ou des bords tombés réalisés sur les bords de la doublure 11 autour de l'ajourage 13. L'utilisation de matériaux composites permet en outre d'avoir une structure de rigidification 2 à la fois rigide et légère. D'autres matériaux peuvent être utilisés, comme par exemple en tôle d'aluminium de nuance 5000 avec des épaisseurs de 2 à 2,5 mm, embouties et assemblées. La structure de rigidification 2 peut aussi être réalisée en magnésium ou aluminium par moulage.

Les deuxième et troisième branches 25 et 26, ainsi que les branches de l'extension 212 ont de préférence une section en forme de U ou de H, et comprennent des nervures reliant les parois latérales du U ou du H de manière à rigidifier lesdites branches. La première branche 24 peut aussi être de conception similaire.

La partie fenêtre de la porte 1 comporte un encadrement 15 formant un cadre, comportant une structure basse disposée le long du bord haut du caisson, et de préférence fixée à la doublure 11. L'encadrement 15 est de préférence dans une matière plus rigide ou réalisée avec des épaisseurs plus grandes que celle de la doublure 1 afin de lui donner une grande rigidité. La doublure 11 peut comporter une partie s'étendant dans la partie fenêtre et sur laquelle est disposé l'encadrement 15, ou ne s'étendre que dans la partie caisson. L'encadrement 15 permet d'avoir une partie fenêtre rigide. Un renfort d'encadrement 18 est disposé sur l'encadrement 15, couvrant au moins une partie de l'encadrement 15 au-dessus du bord supérieur du caisson et s'étendant le long d'au moins une partie d'un bord latéral de l'encadrement 15. Ledit renfort d'encadrement 18 renforce l'encadrement 15 vis-à-vis des efforts de torsion suivant un axe parallèle au bord supérieur du caisson agissant sur la partie fenêtre de la porte 1.

Dans ce mode de réalisation, la structure basse de l'encadrement 15 forme le renfort longitudinal 14. Le point de fixation haut 21 de la structure de rigidification 2 est alors fixé au moins sur cette structure basse de l'encadrement 15. En variante, le renfort longitudinal 14 peut être réalisé par la structure basse de l'encadrement 15 associée à d'autres moyens de renfort, comme par exemple un renfort de choc frontal.

Le renfort de charnières 12 s'étend jusqu'à la structure basse de l'encadrement 15 qui forme le renfort longitudinal 14.

Dans le mode de réalisation de la fig. 2, un premier rail de lève-vitre est fixé ou intégré à la première branche 24, non visible sur la fig. 2 car positionné derrière ladite première branche 24. Un deuxième rail 3 de lève-vitre est fixé entre le renfort longitudinal 14 et la partie de la doublure 1 situé en dessous de l'ajourage 13. Il vient renforcer la porte 1. En variante, le deuxième rail 3 peut être relié à la structure de rigidification 2 pour renforcer la rigidité de la porte 1. Par exemple, le deuxième rail peut être relié à l'extension 212.

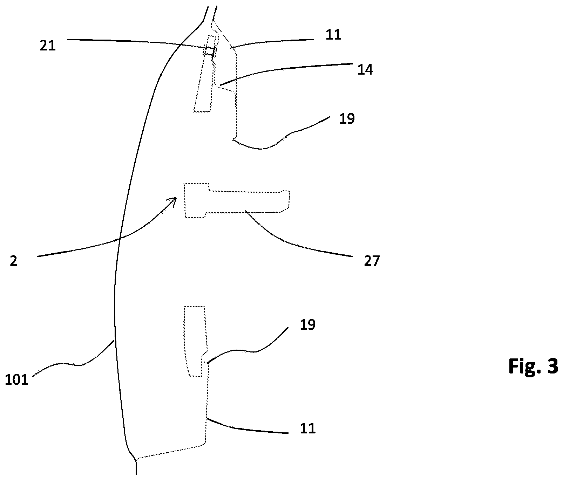

La fig. 3 est une vue en coupe de la porte au niveau du point de fixation haut 21. Le renfort longitudinal 14 est fixé de part et d'autre sur la doublure 11. La structure de rigidification 2 est fixée sur le renfort longitudinal 14. Les moyens de fixation sont des moyens classiquement utilisés pour fixer un module de porte ou des rails de lève-vitre à une doublure de porte, comme par exemple un système écrou et boulon. Le bord de la doublure 11 autour de l'ajourage 13 comporte un bord tombé 19 tout autour dudit ajourage 13 permettant de rigidifier ladite doublure 11.

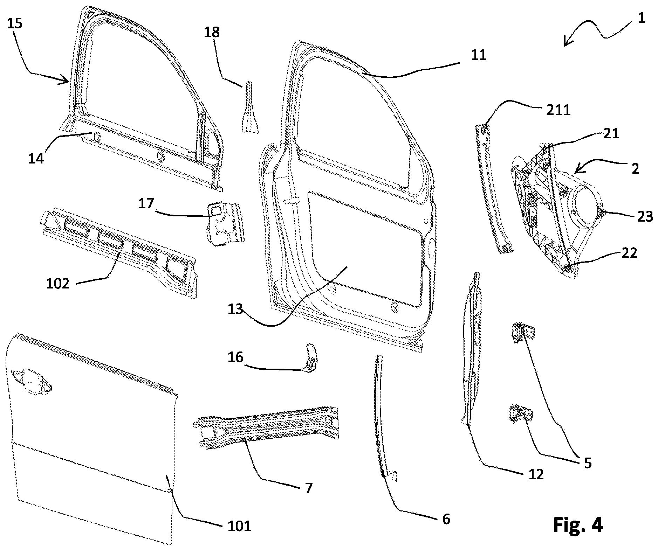

La fig. 4 est une vue en éclaté d'un mode de réalisation d'une porte 1 suivant l'invention, montrant les différents éléments constituant ladite porte 1. Le rail de lève-vitre 211 est fixé sur la première branche 24. Le renfort de fixation bas 16 sur lequel est fixé le point de fixation bas 22 forme une équerre de manière à suivre la forme de la doublure 11 au niveau de la fixation de ladite équerre 16 sur ladite doublure 11. Des charnières 5 se fixent sur le renfort de charnières 12. Un renfort de choc latéral 7 est fixé à la doublure 11. Un renfort de frise du panneau extérieur 102 est fixé le long du bord supérieur du panneau extérieur 101 qui longe le bord haut du caisson, sous la partie fenêtre.

Le renfort de charnières 12 est fixé sur le bord latéral de la doublure 11 et reçoit les charnières 5. Le renfort de charnières 12 forme une partie de la tranche latérale de la porte 1, l'autre partie étant formée par une partie de la doublure 11. La doublure 11 recouvre une partie du renfort de charnières 12 le long de la tranche de la porte. Ce recouvrement permet de fixer le renfort de charnières 12 à la doublure dans ces zones de recouvrement. La fixation peut se faire par clinchage, avec ou sans collage, par soudage, rivetage, ou tout autre moyen de fixation connu par l'homme du métier.

## Revendications

1. Porte (1) de véhicule comportant au moins une doublure (11) de porte et un panneau extérieur (101) fixé à ladite doublure (11), définissant entre eux un caisson dans la partie de la porte (1) située sous une partie fenêtre, au moins un renfort (14) positionné le long du bord haut du caisson, sous la partie fenêtre de la porte (1), la doublure (11) comportant un ajourage (13) qui s'étend sur une partie prépondérante de la longueur et de la hauteur de ladite doublure (11) dans le caisson, de sorte que ladite partie de la doublure (11) située dans le caisson est sensiblement réduite à un cadre, une structure de rigidification (2) de ladite porte (1) fixée dans la zone du caisson et comportant au moins trois points de fixation (21, 22, 23), dont un premier point de fixation de la structure de rigidification (2) est un point de fixation haut (21) fixé audit renfort (14), un deuxième point de fixation de la structure de rigidification (2) est un point de fixation bas (22) fixé à ladite porte (1) en au moins un point situé en dessous de l'ajourage (13), au niveau de la partie du caisson sensiblement située à l'opposé du point de fixation haut, en se plaçant dans le référentiel du véhicule lorsque la porte (1) est installée sur ledit véhicule, et un troisième point de fixation de la structure de rigidification (2) est un point de fixation intermédiaire (23) fixé à la porte (1) entre l'ajourage (13) et un des bords latéraux de la porte (1), **caractérisé en ce que** la structure de rigidification (2) comporte au moins trois branches (24, 25, 26), une première branche (24) disposée entre le point de fixation haut (21) et le point de fixation bas (22), une deuxième branche (25) et une troisième branche (26) reliant chacune la première branche (24) au point de fixation intermédiaire (23).

2. Porte (1) suivant la revendication 1 **caractérisée en ce que** le point de fixation bas (22) de la structure de rigidification (2) est fixé directement sur la doublure (11) et/ou sur un renfort de fixation bas (16) fixé à la doublure (11).

3. Porte (1) suivant l'une des revendications précédentes **caractérisée en ce qu'**elle comporte un renfort de charnières (12) fixé à l'une des tranches latérales de la porte (1) et sur lequel des charnières (5) sont fixées.

4. Porte (1) suivant la revendication précédente, **caractérisée en ce que** le renfort de charnières (12) forme au moins en partie la tranche de la porte (1).

5. Porte (1) suivant l'une des revendications 1 ou 2, prise en combinaison avec l'une des revendications 3 ou 4, **caractérisée en ce que** le point de fixation intermédiaire (23) est fixé au renfort de charnières (12) ou/et à la doublure (11).

6. Porte (1) suivant l'une des revendications précédentes, **caractérisée en ce que** la doublure (11) est réalisée en tôle d'aluminium dont la nuance de l'aluminium est une nuance de série 3000 ou 8000.

7. Porte (1) suivant l'une des revendications précédentes, **caractérisée en ce qu'**elle comporte un encadrement de vitre (15) se positionnant autour de la partie fenêtre de la porte (1) et formant un cadre, comportant un bord inférieur d'encadrement (14) positionné dans le caisson le long du bord supérieur dudit caisson longeant la partie fenêtre de la porte, ledit bord inférieur d'encadrement formant au moins une partie du renfort (14).

## Patentansprüche

1. Fahrzeugtür (1), die mindestens eine Türverkleidung (11) und eine Außenplatte (101) umfasst, die an der Verkleidung (11) befestigt ist, die zwischeneinander einen Kasten in dem Teil der Tür (1), der sich unter dem Fensterteil befindet, definieren, mindestens eine Verstärkung (14), die entlang des oberen Rands des Kastens unter dem Fensterteil der Tür (1) positioniert ist, wobei die Verkleidung (11) eine Aussparung (13) umfasst, die sich auf einem Hauptteil der Länge und der Höhe der Verkleidung (11) in dem Kasten derart erstreckt, dass der Teil der Verkleidung (11), der sich in dem Kasten befindet, im Wesentlichen auf einen Rahmen reduziert ist, eine Versteifungsstruktur (2) der Tür (1), die in der Zone des Kastens befestigt ist und mindestens drei Befestigungsstellen (21, 22, 23) umfasst, von welchen eine erste Befestigungsstelle der Versteifungsstruktur (2) eine obere Befestigungsstelle (21) ist, die an der Verstärkung (14) befestigt ist, eine zweite Befestigungsstelle der Versteifungsstruktur (2) eine untere Befestigungsstelle (22) ist, die an der Tür (1) an mindestens einer Stelle befestigt ist, die sich unter der Aussparung (13) auf dem Niveau des Teils des Kastens befindet, der im Wesentlichen der oberen Befestigungsstelle entgegengesetzt ist, indem sie sich in dem Bezugssystem des Fahrzeugs platziert, wenn die Tür (1) auf dem Fahrzeug installiert ist, und eine dritte Befestigungsstelle der Versteifungsstruktur (2) eine Zwischenbefestigungsstelle (23) ist, die an der Tür (1) zwischen der Aussparung (13) und einem der Seitenränder der Tür (1) befestigt ist, **dadurch gekennzeichnet, dass** die Versteifungsstruktur (2) mindestens drei Schenkel (24, 25, 26) umfasst, wobei ein erster Schenkel (24) zwischen der oberen Befestigungsstelle (21) und der unteren Befestigungsstelle (22) angeordnet ist, wobei ein zweiter Schenkel (25) und ein dritter Schenkel (26) jeweils den ersten Schenkel (24) mit der Zwischenbefestigungsstelle (23) verbinden.

2. Tür (1) nach Anspruch 1, **dadurch gekennzeichnet, dass** die untere Befestigungsstelle (42) der Versteifungsstruktur (2) direkt auf der Verkleidung (11) und/oder auf einer unteren Befestigungsverstärkung (16), die an der Verkleidung (11) befestigt ist, befestigt ist.

3. Tür (1) nach einem der vorstehenden Ansprüche, **dadurch gekennzeichnet, dass** sie eine Scharnierverstärkung (12) umfasst, die an einer der Seitenkanten der Tür (1) befestigt ist, und auf der Scharniere (5) befestigt sind.

4. Tür (1) nach dem vorstehenden Anspruch, **dadurch gekennzeichnet, dass** die Scharnierverstärkung (12) mindestens zum Teil die Kante der Tür (1) bildet.

5. Tür (1) nach einem der Ansprüche 1 oder 2, kombiniert mit einem der Ansprüche 3 oder 4 genommen, **dadurch gekennzeichnet, dass** die Zwischenbefestigungsstelle (23) an der Scharnierverstärkung (12) und/oder an der Verkleidung (11) befestigt ist.

6. Tür (1) nach einem der vorstehenden Ansprüche, **dadurch gekennzeichnet, dass** die Verkleidung (11) aus Aluminiumblech hergestellt ist, wobei die Sorte des Aluminiums eine Sorte der Serie 3000 oder 8000 ist.

7. Tür (1) nach einem der vorstehenden Ansprüche, **dadurch gekennzeichnet, dass** sie einen Scheibenrahmen (15) umfasst, der sich um den Fensterteil der Tür (1) positioniert und einen Rahmen bildet, der einen unteren Umrahmungsrand (14) umfasst, der in dem Kasten entlang des oberen Rands des Kastens, der an dem Fensterteil der Tür entlang führt, positioniert ist wobei der untere Umrahmungsrand mindestens einen Teil der Verstärkung (14) bildet.

## Claims

1. Vehicle door (1) comprising at least one door lining (11) and an outer panel (101) fixed to said lining (11), together defining a chamber in the portion of the door (1) located under a window portion, at least one reinforcement (14) positioned along the top edge of the chamber, under the window portion of the door (1), the lining (11) comprising a perforation (13) which extends over a major portion of the length and of the height of said lining (11) in the chamber, such that said portion of the lining (11) located in the chamber is substantially reduced to a frame, a structure for rigidifying (2) said door (1) fixed in the zone of the chamber and comprising at least three fixing points (21, 22, 23), of which a first fixing point of the rigidifying structure (2) is a top fixing point (21) fixed to said reinforcement (14), a second fixing point of the rigidifying structure (2) is a bottom fixing point (22) fixed to said door (1) in at least one point located below the perforation (13), at the level of the portion of the chamber substantially located opposite the top fixing point, by being placed in the body of the vehicle when the door (1) is installed on said vehicle, and a third fixing point of the rigidifying structure (2) is an intermediate fixing point (23) fixed to the door (1) between the perforation (13) and one of the side edges of the door (1), **characterised in that** the rigidifying structure (2) comprises at least three branches (24, 25, 26), a first branch (24) arranged between the top fixing point (21) and the bottom fixing point (22), a second branch (25) and a third branch (26) each connecting the first branch (24) to the intermediate fixing point (23).

2. Door (1) according to claim 1, **characterised in that** the bottom fixing point (22) of the rigidifying structure (2) is fixed directly on the lining (11) and/or on a bottom fixing reinforcement (16) fixed to the lining (11).

3. Door (1) according to one of the preceding claims, **characterised in that** it comprises a hinge reinforcement (12) fixed to one of the side sections of the door (1) and on which hinges (5) are fixed.

4. Door (1) according to the preceding claim, **characterised in that** the hinge reinforcement (12) forms at least partially the section of the door (1).

5. Door (1) according to one of claims 1 or 2, combined with one of claims 3 or 4, **characterised in that** the intermediate fixing point (23) is fixed to the hinge reinforcement (12) or/and to the lining (11).

6. Door (1) according to one of the preceding claims, **characterised in that** the lining (11) is made of aluminium sheet metal, of which the shade of the aluminium is a shade of series 3000 or 8000.

7. Door (1) according to one of the preceding claims, **characterised in that** it comprises a glass frame (15) being positioned around the window portion of the door (1) and forming a frame, comprising a lower frame edge (14) positioned in the chamber along the upper edge of said chamber bordering the window portion of the door, said lower frame edge forming at least one portion of the reinforcement (14).
